# EUROPÄISCHE PATENTSCHRIFT

(11) **EP 3 622 800 B1**
(45) Veröffentlichungstag und Bekanntmachung des Hinweises auf die Patenterteilung: **07.09.2022**
(21) Anmeldenummer: 19184584.1
(22) Anmeldetag: 05.07.2019
(51) Int. Cl.: B60S 1/04, A01D 41/127

(54) **LANDWIRTSCHAFTLICHE ERNTEMASCHINE**
AGRICULTURAL HARVESTING MACHINE
ENGIN AGRICOLE DE RÉCOLTE

(30) Priorität: 17.09.2018 DE 102018122683
(43) Veröffentlichungstag der Anmeldung: 18.03.2020
(73) Patentinhaber: CLAAS Selbstfahrende Erntemaschinen GmbH, 33428 Harsewinkel (DE)
(72) Erfinder: Neitemeier, Dennis, 59510 Lippetal (DE); Barther, Marvin, 33161 Hövelhof (DE); Fischer, Frédéric, 59823 Arnsberg (DE); Kettelhoit, Boris, 33335 Gütersloh (DE)
(74) Vertreter: CLAAS Gruppe

(56) Entgegenhaltungen:
- EP-A1- 2 143 316
- EP-A1- 3 002 165
- EP-A1- 3 300 019
- WO-A1-2018/150716
- DE-A1-102014 112 881
- US-A- 6 000 703

## Beschreibung

Die vorliegende Anmeldung betrifft eine Erntemaschine gemäß dem Oberbegriff von Anspruch 1.

Die Erntemaschine, die insbesondere von einem Mähdrescher oder einem Feldhäcksler gebildet sein kann, umfasst einen Tragrahmen, ein Schneidwerk, einen Schrägförderer sowie eine Fahrerkabine. Der Tragrahmen ist mittels eines Fahrwerks fahrbar auf einem Untergrund gelagert, wobei an der Erntemaschine angeordnete Bauteile mittels des Tragrahmens bzw. an dem Tragrahmen gelagert sind. Auf diese Weise können auf die Erntemaschine einwirkende Kräfte mittels des Tragrahmens in Richtung der Fahrwerke und schließlich des Untergrunds abgeleitet werden. Das Schneidwerk dient dazu, zu erntende Pflanzen zu schneiden. Es kann insbesondere über einen langgestreckten Mähbalken verfügen, der über zwei relativ zueinander bewegbare Messerreihen verfügt. Eine Breite des Schneidwerks übersteigt typischerweise deutlich eine Breite des Schrägförderers, mittels dessen die geschnittenen Pflanzen in Richtung weiterer Arbeitsorgane der Erntemaschine, beispielsweise eines Dreschorgans bei einem Mähdrescher oder eines Häckselorgans bei einem Feldhäcksler, förderbar sind. Um die geschnittenen Pflanzen dem Schrägförderer zuzuführen, ist es typischerweise erforderlich, sie im Bereich des Schneidwerks in eine Richtung quer zur Fahrtrichtung der Erntemaschine zusammenzuführen, bevor sie an den Schrägförderer übergeben werden. Hierzu werden typischerweise gegenläufig ausgebildete Förderschnecken verwendet, mittels derer geschnittene Pflanzen von den jeweiligen Seiten des Schneidwerks aus in Richtung eines Mittelbereichs desselben und mithin in Richtung des Schrägförderers förderbar sind.

Die Fahrerkabine ist typischerweise oberhalb des Schneidwerks angeordnet, sodass ein sich in der Fahrerkabine aufhaltender Maschinenführer einen guten Überblick über das Erntegut sowie das Schneidwerk hat und infolgedessen die Erntemaschine präzise steuern kann. Da der Einsatz von Erntemaschinen typischerweise auf vergleichsweise unebenem Terrain stattfindet, ist die Erntemaschine erheblichen Vibrationen unterlegen. Um die Bequemlichkeit für den Maschinenführer zu erhöhen, ist es üblich, die Fahrerkabine mittels mindestens einer Dämpfereinheit an dem Tragrahmen zu lagern. Auf diese Weise werden auf den Tragrahmen einwirkende Vibrationen sowohl infolge von Unebenheiten des Untergrundes als auch infolge von Betriebskräften der Erntemaschine lediglich in reduziertem Umfang an die Fahrerkabine und mithin an den Maschinenführer weitergegeben.

Erntemaschinen der vorstehend beschriebenen Art sind im Stand der Technik bereits bekannt. Hierzu wird beispielsweise auf die deutsche Offenlegungsschrift DE 10 2016 118 244 A1 verwiesen. Diese umfasst ein Bildverarbeitungssystem, mittels dessen mittels einer Kamera aufgenommene Bilder verarbeitbar sind. Insbesondere ist es möglich, sukzessive eine Vielzahl von Bildern aufzunehmen, die sodann mittels des Bildverarbeitungssystems zunächst vorverarbeitet werden, bevor anhand der vorverdichteten Bilder mindestens ein Zustandsparameter des sich in dem Schneidewerk und/oder dem Schrägförderer bewegenden Ernteguts ermittelbar ist. Insbesondere schlägt die genannte Schrift vor, Flussgeschwindigkeiten des Ernteguts im Bereich des Schneidwerks und/oder des Schrägförderers zu bestimmen.

Um einen geeigneten Überblick über das Schneidwerk und den Schrägförderer zu erhalten, ist es bekannt, mindestens eine Kamera an der Erntemaschine anzuordnen, wobei die Kamera oberhalb der Fahrerkabine angeordnet ist. Aus dieser Position kann die Kamera einen Erfassungsbereich erfassen, der zumindest einen Teil des Schneidwerks und/oder des Schrägförderers sowie vorzugsweise eines in Fahrtrichtung der Erntemaschine betrachtet vor dem Schneidwerk befindlichen Vorbereichs sowie eines hinter dem Schneidwerk befindlichen Rückbereichs beinhaltet. In der Patentanmeldung EP3 300 019 A1 wird ein Mähdrescher offenbart, bei dem zwei Kameras außen an der Fahrzeugkabine angebracht sind.

Bei der bekannten Erntemaschine hat es sich als problematisch herausgestellt, dass die Kamera bzw. Kameras infolge des Ernteprozesses einer erheblichen Schmutzbelastung ausgesetzt sind. Insbesondere beim Dreschen von Getreide liegt eine erhebliche Staubbelastung vor, die zu einer Verschmutzung der Kamera bzw. einer Linse derselben führen kann. Eine solche Verschmutzung hat zur Folge, dass mittels der Kamera aufgenommene Bilder Elemente enthalten, die für die angestrebte Auswertung ohne Bedeutung sind und sogar eine Verfälschung ermittelter Ergebnisse zur Folge haben können.

Der vorliegenden Anmeldung liegt mithin die Aufgabe zugrunde, eine Erntemaschine bereitzustellen, mittels derer auch in Gegenwart einer erhöhten Schmutzbelastung im Zuge eines Ernteprozesses zuverlässige Auswertungsergebnisse erzielt werden können.

Die zugrunde liegende Aufgabe wird erfindungsgemäß mittels einer landwirtschaftlichen Erntemaschine mit den Merkmalen des Anspruchs 1 gelöst. Vorteilhafte Ausgestaltungen ergeben sich aus den Unteransprüchen 2 bis 10.

Die erfindungsgemäße Erntemaschine ist dadurch gekennzeichnet, dass mindestens eine Kamera in einem Innenraum der Fahrerkabine angeordnet ist. Dabei ist die Kamera derart ausgerichtet, dass sie einen Erfassungsbereich durch eine Frontscheibe der Fahrerkabine hindurch erfasst und auf das Schneidwerk und/oder den Schrägförderer ausgerichtet ist. Die Kamera ist in dabei einem Wirkungsbereich einer Reinigungseinrichtung der Frontscheibe angeordnet, sodass eine optische Erfassung des Erfassungsbereichs zumindest durch ein Teil des Wirkungsbereichs der Reinigungseinrichtung hindurch erfolgen kann. Bei der Reinigungseinrichtung kann es sich insbesondere um einen Scheibenwischer handeln, mittels dessen die Frontscheibe von die Sicht behindernden Elementen gesäubert werden kann. Dies kann sowohl Staubpartikel als auch etwaiges Regenwasser betreffen.

Die erfindungsgemäße Erntemaschine hat viele Vorteile. Insbesondere ist die Kamera infolge der Anordnung innerhalb der Fahrerkabine vor Verschmutzungen geschützt, die außerhalb der Fahrerkabine infolge des Ernteprozesses auftreten können. Derartiger Schmutz kann sich lediglich an der Frontscheibe der Fahrerkabine anlagern, wodurch der Erfassungsbereich der Kamera gleichermaßen beeinträchtigt wäre. Daher ist es von Bedeutung, dass die Kamera in dem Wirkungsbereich der Reinigungseinrichtung angeordnet ist, mittels derer die Frontscheibe fortwährend von etwaigen Schmutzpartikeln gesäubert werden kann. Auf diese Weise ist es besonders einfach möglich, sicherzustellen, dass mittels der Kamera aufgenommene Bilder frei von Störeinflüssen bleiben, die durch eine Verschmutzung der Kamera selbst oder der Frontscheibe bedingt sind. Entsprechend ist eine Auswertung der aufgenommenen Bilder mittels einer Auswerteinheit solchen Störeinflüssen nicht unterlegen, wodurch ermittelte Ergebnisse eine höhere Genauigkeit aufweisen und deren Erstellung grundsätzlich eine geringere Fehleranfälligkeit unterliegt.

Die Reinigungseinrichtung ist vorteilhafterweise derart ausgebildet, dass sie die Frontscheibe unter Ausführung einer Kreisbewegung und/oder einer Linearbewegung zumindest teilweise überstreicht. Bei Ausführung der Reinigungseinrichtung in Form eines Scheibenwischers ist es insbesondere denkbar, dass ein oder mehrere Scheibenwischer verwendet werden, die beispielsweise an einem oberen Ende der Fahrerkabine bzw. der Frontscheibe angeordnet sind und mittels Schwenkarmen geführte Wischerblätter zyklisch über eine Außenfläche der Frontscheibe bewegen. Vorteilhafterweise ist die Reinigungseinrichtung ergänzend mit mindestens einer Flüssigkeitsanlage ausgestattet, mittels derer eine Reinigungsflüssigkeit, insbesondere Wasser, auf die Frontscheibe aufgebracht werden kann. Die Kombination aus Aufbringen einer Reinigungsflüssigkeit und Betätigen mindestens eines Scheibenwischers ist besonders gut geeignet, die Frontscheibe gründlich zu reinigen, sodass daran anhaftende Schmutzpartikel entfernt werden. Ein Störeinfluss auf die mittels der mindestens einen Kamera aufgenommenen Bilder ist auf diese Weise minimierbar.

Vorteilhafterweise ist die Kamera derart ausgerichtet, dass der Erfassungsbereich, der mittels der Kamera optisch erfassbar ist, zumindest einen Teil des Schneidwerks und/oder des Schrägförderers beinhaltet. Die Erfassung zumindest eines Teils des Schneidwerks ist insbesondere im Hinblick auf eine Beobachtung der Gutströme des geernteten Ernteguts vorteilhaft, wobei insbesondere mittels einer Analyse der aufgenommenen Bilder Zustandsparameter des geschnittenen Ernteguts ermittelbar sind. Dies betrifft insbesondere eine Flussgeschwindigkeit des Ernteguts sowie eine Verteilung des Ernteguts an dem Schneidwerk. In Abhängigkeit der ermittelten Zustandsparameter ist es sodann denkbar, mindestens ein Arbeitsorgan der jeweiligen Erntemaschine, vorzugsweise eine Mehrzahl von Arbeitsorganen, automatisch anzusteuern und auf diese Weise den Betrieb der Erntemaschine zu optimieren.

Die Erfassung zumindest eines Teils des Schrägförderers bietet zudem den Vorteil, dass der Schrägförderer als eine "Referenzregion" definiert werden kann. Dem liegt die Überlegung zugrunde, dass der Schrägförderer im Vergleich zu dem Schneidwerk auch bei unebenen Verhältnissen des Untergrundes vergleichsweise geringen Schwingungen relativ zu dem Tragrahmen unterlegen ist, da er unmittelbar an dem steifen Tragrahmen angeordnet ist. Die Kamera hingegen, die in der mittels mindestens einer Dämpfereinheit an dem Tragrahmen angeordneten Fahrerkabine angeordnet ist, folgt der Bewegung des Tragrahmens lediglich in gedämpfter Weise. Dies hat zur Folge, dass die Kamera im Zuge der Bewegung der Erntemaschine über den Untergrund eine von dem Schneidwerk abweichende Gesamtbewegung ausführt, die sich sodann entsprechend in den aufgenommenen Bildern wiederfindet. Die Bilder enthalten gewissermaßen einen "statischen Anteil", um die sich der gesamte Bildinhalt von einem zu dem nächsten Bild verschiebt. Die Identifizierung einer Referenzregion in verschiedenen Bildern, die für die weitere Auswertung herangezogen werden, dient nunmehr dazu, diesen statischen Anteil gewissermaßen "herauszurechnen", in dem die miteinander in Beziehung zu setzenden Bilder anhand der jeweiligen Referenzregion relativ zueinander ausgerichtet werden. Da der Schrägförderer wie vorstehend beschrieben von schwingungsabhängigen Bewegungsanteilen weitestgehend frei ist, eignet er sich besonders gut als eine solche Referenzregion. Entsprechend ist es von besonderem Vorteil, wenn der Schrägförderer zumindest zum Teil innerhalb des Erfassungsbereichs der Kamera liegt, sodass er als Referenzregion ausgewählt werden kann.

Weiterhin kann es von besonderem Vorteil sein, wenn der Erfassungsbereich, der mittels der Kamera optisch erfassbar ist, einen in Fahrtrichtung der Erntemaschine vor dem Schneidwerk befindlichen Vorbereich und/oder einen in Fahrtrichtung der Erntemaschine hinter dem Schneidwerk befindlichen Rückbereich beinhaltet. Die Erfassung dieser Bereiche erlaubt die Auswertung der aufgenommenen Bilder unter weiteren Aspekten, wobei beispielsweise die Verteilung der noch zu schneidenden Pflanzen in dem Vorbereich sowie das Schneidergebnis der geschnittenen Pflanzen in dem Rückbereich ermittelbar sind. Betreffend den Rückbereich sind insbesondere solche Pflanzen erfassbar, die zu hoch abgeschnitten wurden. Die größere Datenmenge betreffend die optischen Informationen der aufgenommenen Bilder ermöglicht in jedem Fall eine Auswertung der Bilder hinsichtlich verschiedener Zustands- und/oder Ernteparameter, die für den Betrieb, insbesondere eine Optimierung des Betriebs, der Erntemaschine von Vorteil sein können.

Die erfindungsgemäße Erntemaschine weiter ausgestaltend ist die mindestens eine Kamera in Form einer RGB-Kamera oder einer Stereokamera ausgebildet. Mittels derartiger Kameras können zusätzliche optische Informationen erfasst werden, die den Informationsgehalt eines mittels einer einfachen Schwarzweißkamera aufgenommenen Bildes übersteigen und mithin für eine weitere Auswertung herangezogen werden können. Beispielsweise ist es denkbar, über Farbwerte betreffend das geschnittene Erntegut Zustandsparameter des Ernteguts zu identifizieren. Die Verwendung einer Stereokamera ermöglicht zudem die Erstellung dreidimensionaler Bilddaten, die sodann gleichermaßen einer weiteren Auswertung zu Grunde gelegt werden können.

In einer besonders vorteilhaften Ausgestaltung umfasst die erfindungsgemäße Erntemaschine eine Mehrzahl von Kameras, beispielsweise zwei Kameras, die vorzugsweise auf unterschiedliche Erfassungsbereiche gerichtet sind. Insbesondere ist es denkbar, mindestens eine Kamera auf einen ersten Seitenbereich und mindestens eine Kamera auf einen zweiten, dem ersten Seitenbereich gegenüberliegenden Seitenbereich des Schneidwerks zu richten, sodass die Seitenbereiche des Schneidwerks unabhängig voneinander erfasst und hinsichtlich von Zustandsparametern des geschnittenen Ernteguts und/oder von Arbeitsorganen der Erntemaschine ausgewertet werden können. Beispielsweise ist eine Flussgeschwindigkeit des geschnittenen Ernteguts unabhängig für beide Seiten des Schneidwerks ermittelbar. Ferner ist es denkbar, bei Verwendung voneinander unabhängiger Förderwalzen für die Seitenbereiche des Schneidwerks deren Zustandsparameter, beispielsweise deren Rotationsgeschwindigkeit, zu ermitteln. Eine solche Information kann insbesondere im Hinblick auf eine automatische Ansteuerung mindestens eines Arbeitsorgans der Erntemaschine von Interesse sein.

Die mindestens eine Kamera ist vorteilhafterweise derart in der Fahrerkabine angeordnet, dass sie sich in einem oberen Bereich der Fahrerkabine, vorzugsweise an einer Decke derselben, befindet. Diese Anordnung erlaubt es, den Erfassungsbereich der Kamera auf ein möglichst großes Maß zu erweitern, da die Kamera bei Zugrundelegen eines konstanten Bildwinkels mit zunehmendem Abstand von dem Untergrund einen umso größeren Erfassungsbereich abdecken kann. Die Anordnung der Kamera an der Decke der Fahrerkabine korrespondiert mit einem maximal möglichen Abstand der Kamera von dem Untergrund, während die Kamera erfindungsgemäß gleichzeitig innerhalb der Fahrerkabine verbleibt.

Vorteilhafterweise umfasst die erfindungsgemäße Erntemaschine mindestens ein Kameragehäuse, innerhalb dessen die Kamera räumlich einfassbar ist. Dabei versteht es sich, dass trotz des verwendeten Kameragehäuses ein optischer Bereich der Kamera frei bleiben muss, sodass die Kamera weiterhin den Erfassungsbereich optisch erfassen kann. Idealerweise schließt das Kameragehäuse die Kamera gemeinsam mit der Frontscheibe und der Decke der Fahrerkabine ein, wobei ein Teil der Frontscheibe sowie ein Teil der Decke der Fahrerkabine gewissermaßen als Wandungen wirken, die gemeinsam mit dem Kameragehäuse die Kamera insgesamt räumlich umschließen. Die Einfassung der Kamera in ein Kameragehäuse im Inneren der Fahrerkabine trägt grundsätzlich dazu bei, dass die Kamera auch vor Verschmutzungen geschützt ist, die innerhalb der Fahrerkabine auftreten. Diese mögen zwar von derart geringer Ausprägung sein, dass eine regelmäßige Reinigung der Kamera auch ohne Vorhandensein eines Kameragehäuses nur periodisch erforderlich ist; gleichwohl wäre eine solche periodische Reinigung von Nöten, die bei Verwendung des beschriebenen Kameragehäuses gänzlich entfallen kann.

In der erfindungsgemäßen Erntemaschine ist die Fahrerkabine an einer oberen Vorderkante mit mindestens einer, vorzugsweise außen liegenden, Sonnenblende ausgestattet. Diese dient dazu, die im Inneren der Fahrerkabine angeordnete Kamera zumindest teilweise zu verschatten. Auf diese Weise wird vermieden, dass die Kamera unmittelbar durch Sonnenlicht "geblendet" wird. Ein derartiger Effekt ist im Stand der Technik von außen liegenden Kameras bekannt, wobei infolge von Sonneneinstrahlung die aufgenommenen Bilder stark unterschiedliche Helligkeitswerte aufweisen können. Derartige Abweichungen zwischen den aufgenommenen Bildern, die im Weiteren zur Auswertung herangezogen werden, sind für die Genauigkeit sowie die Zuverlässigkeit der Auswertung grundsätzlich abträglich. Die Verschattung der Kamera zumindest in solcher Weise, dass die Kamera über einen Großteil eines Arbeitstages hinweg vor direkter Sonneneinstrahlung geschützt innerhalb der Fahrerkabine angeordnet ist, ist entsprechend von Vorteil.

In einer bevorzugten Ausführungsform der Erntemaschine ist die mindestens eine Kamera relativ zu der Fahrerkabine verdrehbar gelagert. Mit anderen Worten weist die Kamera mindestens einen Rotationsfreiheitsgrad auf, vorzugsweise eine Mehrzahl von Rotationsfreiheitsgraden. Diese Ausgestaltung erlaubt es, die Ausrichtung der Kamera zu verändern und auf diese Weise den Erfassungsbereich zu verschieben. Grundsätzlich ist es denkbar, etwaige Rotationsachsen der Kamera zumindest teilweise motorisch anzutreiben, sodass eine Veränderung der Ausrichtung der Kamera ohne händischen Eingriff erfolgen kann. Ebenfalls ist es denkbar, derartige Motoren mittels einer Steuerung anzusteuern, sodass eine Veränderung der Ausrichtung der Kamera einem vorgegebenen Plan folgend, beispielsweise einem Zeitplan folgend, ausgeführt werden kann. Beispielsweise kann die Ausrichtung der Kamera und mithin eine Verlagerung des Erfassungsbereichs in Abhängigkeit des Sonnenstands bzw. der Lichtverhältnisse oder in Abhängigkeit des zu erntenden Ernteguts erfolgen.

Wie vorstehend bereits mehrfach angedeutet, kann eine solche Ausgestaltung der erfindungsgemäßen Erntemaschine besonders vorteilhaft sein, die über mindestens eine Auswerteinheit verfügt. Diese ist mittels mindestens einer Datenverbindung mit der mindestens einen Kamera verbunden, sodass mittels der Kamera aufgenommene Bilder an die Auswerteinheit übertragbar und schließlich mittels der Auswerteinheit verarbeitbar sind. Die Datenverbindung kann kabelgebunden oder kabellos ausgebildet sein. Die Verarbeitung von Bildern kann vor allem darin bestehen, eine Mehrzahl aufgenommener Bilder miteinander in Beziehung zu setzen bzw. miteinander zu vergleichen und auf diese Weise Veränderungen zu erfassen, die in einem zwischen den Aufnahmen der Bilder verstrichenen Zeitraum aufgetreten sind. Somit ist es beispielsweise denkbar, dass bei einer Aufnahmefrequenz von 30 Bildern pro Sekunde im Zuge eines Vergleichs zweier aufeinanderfolgender Bilder feststellbar ist, dass geschnittene Pflanzen an dem Schneidwerk eine bestimmte Strecke zurückgelegt haben. Die geschnittenen Pflanzen sind nämlich in beiden Bildern erkennbar, wobei sie jedoch an unterschiedlichen Stellen des Schneidwerks erkannt werden. In Kenntnis des Zeitraums, der zwischen den Aufnahmen der beiden Bilder verstrichen ist, lässt sich nunmehr beispielsweise die Flussgeschwindigkeit der geschnittenen Pflanzen an dem Schneidwerk ermitteln. Mittels einer Unterteilung der aufgenommenen Bilder in verschiedene Bereiche kann in dieser Weise weiterhin eine Verteilung von Flussgeschwindigkeiten über das Schneidwerk hinweg erstellt werden. Derartige Auswertungen sind mittels einer Auswerteinheit durchführbar.

Die erfindungsgemäße Erntemaschine ist nachstehend anhand eines Ausführungsbeispiels, das in den Figuren dargestellt ist, näher erläutert. Es zeigt:
- Fig. 1:: Einen vertikalen Längsschnitt durch eine erfindungsgemäße Erntemaschine und
- Fig. 2:: Eine Frontansicht der Erntemaschine gemäß Figur 1.

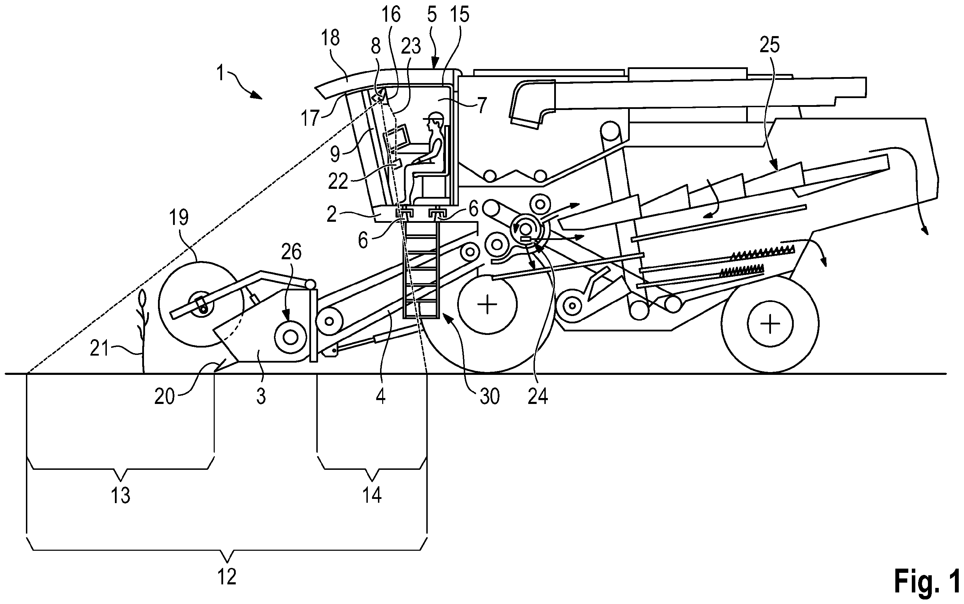

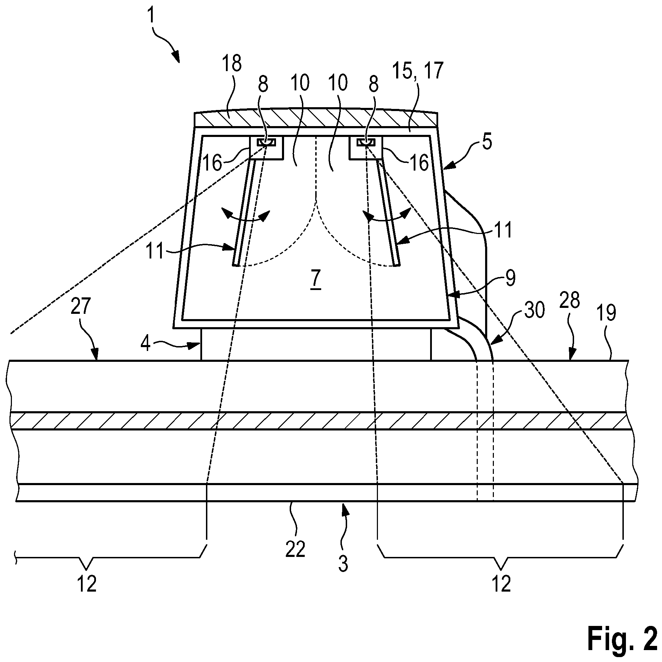

Ein Ausführungsbeispiel, das in den **Figuren 1** **und** **2** gezeigt ist, umfasst eine erfindungsgemäße Erntemaschine **1**, die hier in Form eines Mähdreschers ausgebildet ist. Die Erntemaschine **1** weist ein Schneidwerk **3**, einen Schrägförderer **4** sowie einen Tragrahmen **2** auf. Das Schneidwerk **3** ist mittels des Schrägförderers **4** in Kraft übertragender Weise an dem Tragrahmen **2** gelagert. Ferner umfasst die Erntemaschine **1** weitere Arbeitsorgane, insbesondere ein Dreschorgan **24** sowie ein Trennorgan **25**. Das Schneidwerk **3** umfasst einen Mähbalken **20**, mittels dessen Pflanzen **21**, die auf einem Untergrund wachsen, abschneidbar sind. Hierbei werden die Pflanzen **21** mittels einer drehantreibbaren Haspel **19** dem Mähbalken **20** zugeführt und nach dem Abschneiden in geordneter Weise auf einem in den Figuren nicht dargestellten Schneidtisch des Schneidwerks **3** abgelegt. Das Schneidwerk **3** verfügt weiterhin über zwei parallel zu dem Mähbalken **20** angeordnete Förderwalzen **26**, mittels derer geschnittene Pflanzen **21** in eine quer zu einer Fahrtrichtung der Erntemaschine **1** orientierte Förderrichtung entlang des Schneidwerks 3 förderbar sind. Auf diese Weise können die geschnittenen Pflanzen **21** in Richtung des mittig an dem Schneidwerk **3** angeordneten Schrägförderers 4 befördert und schließlich mittels des letzteren in Richtung des Dreschorgans **24** geführt werden.

Die Erntemaschine **1** verfügt an einem vorderen Ende über eine Fahrerkabine **5**, die unter Zwischenschaltung von Dämpfereinheiten **6** an dem Tragrahmen **2** gelagert ist. Die Dämpfereinheiten **6** bewirken, dass Schwingungen und Vibrationen des Tragrahmens **2** gedämpft an die Fahrerkabine **5** weitergegeben werden. Hierdurch wird der Komfort für den sich in der Fahrerkabine **5** aufhalten den Maschinenführer gesteigert. Die Fahrerkabine **5** befindet sich in einer erhöhten Position an dem Tragrahmen **2** der Erntemaschine 1**,** wobei ein Aufstieg in die Fahrerkabine **5** mittels einer Aufstiegsleiter **30** erfolgt. Die Fahrerkabine **5** verfügt in ihrem vorderen Ende über eine Frontscheibe 9**,** mittels derer die Fahrerkabine **5** zu einer Vorderseite der Erntemaschine **1** hin räumlich abgeschlossen ist. Die Frontscheibe **9** ist hier von Glas gebildet und ist lichtdurchlässig ausgeführt, sodass es dem Maschinenführer möglich ist, einen vor der Erntemaschine **1** befindlichen Bereich einzusehen.

Die Fahrerkabine **5** ist hier mit zwei Kameras **8** ausgestattet, die sich erfindungsgemäß innerhalb der Fahrerkabine **5** sowie jeweils an einem oberen Ende der Fahrerkabine **5** und unmittelbar an der Frontscheibe **9** befinden. Insbesondere sind die Kameras **8** an einer Decke **15** der Fahrerkabine 5 befestigt. Die Kameras **8** sind jeweils auf das Schneidwerk **3** sowie den Schrägförderer **4** ausgerichtet, sodass Erfassungsbereiche **12**, die die Kameras **8** jeweils optisch erfassen, jeweils einen Teil des Schneidwerks **3** sowie einen Teil des Schrägförderers **4** beinhalten. Weiterhin sind die Kameras **8** derart ausgerichtet, dass sie - neben einem auf einen Teil des Schneidwerks **3** selbst entfallenden Schneidwerksbereich **29** - jeweils einen in Fahrtrichtung der Erntemaschine **1** vor dem Schneidwerk **3** befindlichen Vorbereich **13** sowie einen in Fahrtrichtung der Erntemaschine **1** hinter dem Schneidwerk **3** befindlichen Rückbereich **14** erfassen.

Mittels der Anordnung der Kameras **8** innerhalb eines Innenraums **7** der Fahrerkabine **5** sind erstere vor etwaigen Verschmutzungen geschützt, die infolge eines Ernteprozesses auftreten können. Insbesondere bietet die Fahrerkabine **5** einen zur Umgebung hin abgeschlossenen Raum, der eine Verschmutzung der Kameras **8** mit Staub und sonstigen Partikeln zumindest weitestgehend unterbindet. Um die Kameras **8** vollständig vor Verschmutzung zu schützen, sind sie in dem gezeigten Beispiel zusätzlich jeweils mittels eines zugeordneten Kameragehäuses **16** innerhalb der Fahrerkabine **5** eingefasst. Zudem ist die Fahrerkabine **5** an einer oberen Vorderkante **17** mit einer nach vorne hin vorragenden Sonnenblende **18** ausgestattet. Diese dient dazu, die unmittelbar an der Frontscheibe **9** angeordneten Kameras **8** vor direkter Sonneneinstrahlung zu schützen. Auf diese Weise wird direkt auf die Kameras **8** strahlendes Sonnenlicht als Störeinfluss für die aufgenommenen Bilder unterdrückt.

Die Frontscheibe **9** wirkt in dem gezeigten Beispiel mit zwei Reinigungseinrichtungen **11** zusammen, die hier jeweils in Form eines Scheibenwischers ausgebildet sind. Die Reinigungseinrichtungen **11** sind im Bereich einer oberen Vorderkante **17** der Fahrerkabine **5** montiert und sind dazu geeignet, mittels zyklischer Teilkreisbewegungen auf der Frontscheibe **9** jeweils innerhalb eines Wirkungsbereichs **10** die Frontscheibe **9** fortwährend zu säubern. Auf diese Weise wird verhindert, dass die mittels der Kameras **8** aufgenommenen Bilder infolge auf der Frontscheibe **9** angelagerter Schmutzpartikel negativ beeinflusst werden. Eine derartige Beeinflussung kann insbesondere im Zuge einer Auswertung der aufgenommenen Bilder von Nachteil sein und zu Fehlern führen. Die Kameras **8** sind erfindungsgemäß derart angeordnet, dass sie mit den Wirkungsbereichen **10** der Reinigungseinrichtungen **11** korrespondieren. Das heißt, dass eine jeweilige Kamera **8** derart angeordnet und ausgerichtet ist, dass sie ihren jeweiligen Erfassungsbereich **12** durch einen Teil der Frontscheibe **9** hindurch erfasst, der mit einem jeweiligen Wirkungsbereichs **10** der jeweils zugeordneten Reinigungseinrichtung **11** korrespondiert.

Die beiden Kameras **8** sind in dem gezeigten Beispiel auf jeweils einander gegenüberliegende Seitenbereiche **27**, **28** des Schneidwerks **3** gerichtet, sodass sie gemeinsam zumindest einen wesentlichen Teil einer Länge des Schneidwerks **3** optisch erfassen. Innerhalb der Fahrerkabine 5 ist eine Auswerteinheit **22** angeordnet, die mittels kabelloser Datenverbindungen **23** mit den Kameras **8** in Daten übertragender Weise verbunden ist. Die mittels der Kameras **8** aufgenommenen Bilder werden mittels der Datenverbindungen **23** an die Auswerteinheit **22** gesendet und können sodann mittels letzterer verarbeitet bzw. ausgewertet werden. Dies betrifft insbesondere die Ermittlung vorstehend genannter Zustandsparameter des Ernteguts und/oder von Arbeitsorganen der Erntemaschine **1**. Zwecks zuverlässiger Ermittlung jeweiliger Zustandsparameter sind die beiden Kameras **8** jeweils derart ausgerichtet, dass sie neben jeweils einem Teil des Schneidwerks **3** auch jeweils einen Teil des Schrägförderers **4** erfassen. Ferner erfasst zumindest die in Fahrtrichtung der Erntemaschine **1** linke Kamera **8** auch einen Teil der Aufstiegsleiter **30**.

Wie vorstehend dargelegt, kann der Schrägförderer **4** besonders gut als Referenzregion dienen, der zwecks Korrektur eines statischen Anteils einer Gesamtveränderung, insbesondere einer Gesamtbewegung, herangezogen werden kann, die zwischen zwei nacheinander aufgenommenen Bildern derselben Kamera **8**, die mittels der Auswerteinheit **22** ausgewertet werden, vorliegt. Dieser statische Anteil betrifft lediglich Bewegungen der Kameras **8** relativ zu dem Schneidwerk **3**, die infolge von Schwingungen der Fahrerkabine **5** relativ zu dem Tragrahmen **2** sowie infolge von Schwingungen des Schneidwerks **3** relativ zu dem Tragrahmen **2** auftreten. Derartige Bewegungen sind für die Auswertung der aufgenommenen Bilder in aller Regel uninteressant und können sogar verfälschenden Einfluss haben, sodass eine Korrektur dieses statischen Anteils vorteilhaft ist. Aufgrund seiner vergleichsweise steifen Anbindung an den Tragrahmen **2** ist der Schrägförderer **4** besonders gut geeignet, eine für diese Korrektur hilfreiche Referenzregion zu bilden, die auf den einzelnen Bildern identifiziert werden kann. Anhand einer solchen Referenzregion können die miteinander in Beziehung zu setzenden Bilder relativ zueinander ausgerichtet werden, sodass der statische Anteil zumindest im Wesentlichen, vorzugsweise vollständig, eliminiert wird. Etwaige Veränderungen, die sodann im Zuge der weiteren Analyse zwischen den Bildern festgestellt werden, sind dann das Ergebnis von tatsächlichen Bewegungen beispielsweise des geschnittenen Ernteguts und/oder von Arbeitsorganen der Erntemaschine **1**. Nach alldem ist es von besonderem Vorteil, dass der Schrägförderer **4** zumindest zum Teil in den Erfassungsbereichen **12** der Kameras **8** liegt. Neben dem Schrägförderer **4** sind insbesondere der Tragrahmen **2** selbst und/oder die Aufstiegsleiter **30** zur Definition einer Referenzregion geeignet.

### Bezugszeichenliste

- 1: Erntemaschine
- 2: Tragrahmen
- 3: Schneidwerk
- 4: Schrägförderer
- 5: Fahrerkabine
- 6: Dämpfereinheit
- 7: Innenraum
- 8: Kamera
- 9: Frontscheibe
- 10: Wirkungsbereich
- 11: Reinigungseinrichtung
- 12: Erfassungsbereich
- 13: Vorbereich
- 14: Rückbereich
- 15: Decke
- 16: Kameragehäuse
- 17: Vorderkante
- 18: Sonnenblende
- 19: Haspel
- 20: Mähbalken
- 21: Pflanze
- 22: Auswerteinheit
- 23: Datenverbindung
- 24: Dreschorgan
- 25: Trennorgan
- 26: Förderwalze
- 27: Seitenbereich
- 28: Seitenbereich
- 29: Schneidwerksbereich
- 30: Aufstiegsleiter

## Patentansprüche

1. Landwirtschaftliche Erntemaschine (1), insbesondere ein Mähdrescher oder ein Feldhäcksler, umfassend
- einen Tragrahmen (2),
- ein Schneidwerk (3),
- einen Schrägförderer (4) sowie
- eine Fahrerkabine (5),
wobei das Schneidwerk (3) mittels des Schrägförderers (4) an dem Tragrahmen (2) angeordnet ist,
wobei die Fahrerkabine (5) unter Zwischenschaltung mindestens einer Dämpfereinheit (6) an dem Tragrahmen (2) angeordnet ist,
**dadurch gekennzeichnet, dass**
in einem Innenraum (7) der Fahrerkabine (5) mindestens eine Kamera (8) angeordnet ist,
wobei die Kamera (8) durch eine Frontscheibe (9) der Fahrerkabine (5) hindurch auf das Schneidwerk (3) und/oder den Schrägförderer (4) ausgerichtet ist,
wobei die Kamera (8) in einem Wirkungsbereich (10) einer Reinigungseinrichtung (11) der Frontscheibe (9) angeordnet ist, sodass eine optische Erfassung eines Erfassungsbereichs (12) der Kamera (8) zumindest durch einen Teil des Wirkungsbereichs (10) der Reinigungseinrichtung (11) hindurch erfolgen kann,
wobei die Fahrerkabine (5) an einer oberen Vorderkante (17) mindestens eine, vorzugsweise außenliegende, Sonnenblende (18) aufweist, mittels derer die Kamera (8) zumindest teilweise verschattbar ist.

2. Erntemaschine (1) nach Anspruch 1, **dadurch gekennzeichnet, dass** die Reinigungseinrichtung (11) von einem Scheibenwischer gebildet ist, mittels dessen die Frontscheibe (9), vorzugsweise unter Ausführung einer Kreisbewegung und oder einer Linearbewegung, zumindest teilweise überstreichbar ist.

3. Erntemaschine (1) nach Anspruch 1 oder 2, **dadurch gekennzeichnet, dass** der Erfassungsbereich (12), der mittels der Kamera (9) optisch erfassbar ist, zumindest einen Teil des Schneidwerks (3) und/oder des Schrägförderers (4) beinhaltet.

4. Erntemaschine (1) nach einem der Ansprüche 1 bis 3, **dadurch gekennzeichnet, dass** der Erfassungsbereich (12), der mittels der Kamera (8) optisch erfassbar ist, neben einem Schneidwerksbereich (29), der zumindest einen Teil des Schneidwerks (3) beinhaltet, einen von der Erntemaschinen (1) abgewandten, in Fahrtrichtung der Erntemaschine (1) vor dem Schneidwerk (3) befindlichen Vorbereich (13) und/oder einen in Fahrtrichtung der Erntemaschine (1) hinter dem Schneidwerk (3) befindlichen Rückbereich (14) beinhaltet.

5. Erntemaschine (1) nach einem der Ansprüche 1 bis 4, **dadurch gekennzeichnet, dass** mindestens eine Kamera (8) in Form einer RGB-Kamera oder einer Stereokamera ausgebildet ist.

6. Erntemaschine (1) nach einem der Ansprüche 1 bis 5, **gekennzeichnet durch** eine Mehrzahl von Kameras (8), die vorzugsweise auf unterschiedliche Erfassungsbereiche (12) gerichtet sind, wobei weiter vorzugsweise sämtliche Erfassungsbereiche (12) jeweils zumindest einen Teil des Schneidwerks (3) und/oder des Schrägförderers (4) beinhalten.

7. Erntemaschine (1) nach einem der Ansprüche 1 bis 6, **dadurch gekennzeichnet, dass** die Kamera (8) in einem oberen Bereich, vorzugsweise an einer Decke (15), der Fahrerkabine (5) angeordnet ist.

8. Erntemaschine (1) nach einem der Ansprüche 1 bis 7, **gekennzeichnet durch** ein Kameragehäuse (16), mittels dessen die Kamera (8) räumlich einfassbar ist, wobei vorzugsweise das Kameragehäuse (16) in Kraft übertragender Weise mit einer Decke (15) der Fahrerkabine (5) verbunden, vorzugsweise verschraubt, ist.

9. Erntemaschine (1) nach einem der Ansprüche 1 bis 8, **dadurch gekennzeichnet, dass** die Kamera (8) relativ zu der Fahrerkabine (5) verdrehbar gelagert ist, sodass die Kamera (8) mindestens einen Rotationsfreiheitsgrad, vorzugsweise eine Mehrzahl von Rotationsfreiheitsgraden, aufweist.

10. Erntemaschine (1) nach einem der Ansprüche 1 bis 9, **gekennzeichnet durch** mindestens eine Auswerteinheit (22), die mittels einer Datenverbindung (23) mit der Kamera (8) verbunden ist, sodass mittels der Kamera (8) aufgenommene Bilder an die Auswerteinheit (22) übertragbar und mittels der Auswerteinheit (22) verarbeitbar sind.

## Claims

1. An agricultural harvesting machine (1), in particular a combine harvester or a forage harvester, comprising
- a supporting frame (2),
- a cutting assembly (3),
- an inclined conveyor (4), as well as
- a driver's cab (5),
wherein the cutting assembly (3) is disposed on the support frame (2) via the inclined conveyor (4),
wherein the driver's cab (5) is disposed on the supporting frame (2) through the intermediary of at least one damper unit (6),
**characterized in that**
at least one camera (8) is disposed in an interior (7) of the driver's cab (5),
wherein the camera (8) is directed on the cutting assembly (3) and/or the inclined conveyor (4) through a front windscreen (9) of the driver's cab (5),
wherein the camera (8) is disposed in a zone of action (10) of a cleaning device (11) of the front windscreen (9) so that a detection zone (12) of the camera (8) can be optically acquired through at least a portion of the zone of action (10) of the cleaning device (11),
wherein the driver's cab (5) has at least one sun shield (18) at an upper front edge (17), which is preferably external, by means of which the camera (8) can be at least partially shaded.

2. The harvesting machine (1) according to claim 1, **characterized in that** the cleaning device (11) is formed by a windscreen wiper by means of which at least a portion of the front windscreen (9) can be swept over, preferably with the execution of a circular movement and/or a linear movement.

3. The harvesting machine (1) according to claim 1 or claim 2, **characterized in that** the detection zone (12) which can be optically acquired by means of the camera (9) contains at least a portion of the cutting assembly (3) and/or of the inclined conveyor (4).

4. The harvesting machine (1) according to one of claims 1 to 3, **characterized in that** in addition to a cutting assembly zone (29) which contains at least a portion of the cutting assembly (3), the detection zone (12) which can be optically acquired by means of the camera (9) contains a front zone (13) located in front of the cutting assembly (3) in a driving direction of the harvesting machine (1) facing away from the harvest machine (1) and/or a rear zone (14) located behind the cutting assembly (3) in the driving direction of the harvesting machine (1).

5. The harvesting machine (1) according to one of claims 1 to 4, **characterized in that** at least one camera (8) is in the form of an RGB camera or a stereo camera.

6. The harvesting machine (1) according to one of claims 1 to 5, **characterized by** a plurality of cameras (8) which are preferably directed onto different detection zones (12), wherein more preferably, all of the detection zones (12) respectively contain at least a portion of the cutting assembly (3) and/or of the inclined conveyor (4).

7. The harvesting machine (1) according to one of claims 1 to 6, **characterized in that** the camera (8) is disposed in an upper region of the driver's cab (5), preferably at a roof (15).

8. The harvesting machine (1) according to one of claims 1 to 7, **characterized by** a camera housing (16) by means of which the camera (8) can be spatially enclosed, wherein preferably, the camera housing (16) is connected to a roof (15) of the driver's cab (5) in a force-transmitting manner, preferably by being screwed on.

9. The harvesting machine (1) according to one of claims 1 to 8, **characterized in that** the camera (8) is rotatably mounted relative to the driver's cab (5) so that the camera (8) has at least one rotational degree of freedom, preferably a plurality of rotational degrees of freedom.

10. The harvesting machine (1) according to one of claims 1 to 9, **characterized by** at least one evaluation unit (22) which is connected to the camera (8) by means of a data link (23) so that images recorded by the camera (8) can be transferred to the evaluation unit (22) and processed by the evaluation unit (22).

## Revendications

1. Machine agricole de récolte (1), en particulier une moissonneuse-batteuse ou une ensileuse, incluant
- un cadre porteur (2)
- un tablier de coupe (3),
- un convoyeur incliné (4) ainsi que
- une cabine de conduite (5),
le tablier de coupe (3) étant disposé sur le cadre porteur (2) au moyen du convoyeur incliné (4), la cabine de conduite (5) étant disposée sur le cadre porteur (2) avec interposition d'au moins une unité d'amortissement (6),
**caractérisée en ce que**
dans un espace intérieur (7) de la cabine de conduite (5) étant disposée au moins une caméra (8),
la caméra (8) étant orientée vers le tablier de coupe (3) et/ou le convoyeur incliné (4) à travers un pare-brise (9) de la cabine de conduite (5), la caméra (8) étant disposée dans une zone d'action (10) d'un équipement de nettoyage (11) du pare-brise (9), de sorte qu'un palpage optique d'une zone de palpage (12) de la caméra (8) peut s'effectuer au moins à travers une partie de la zone d'action (10) de l'équipement de nettoyage (11),
la cabine de conduite (5) comportant au niveau d'un bord avant supérieur (17) au moins un paresoleil, de préférence extérieur, (18) au moyen duquel la caméra (8) peut être au moins en partie ombragée.

2. Machine de récolte (1) selon la revendication 1, **caractérisée en ce que** l'équipement de nettoyage (11) est formé par un essuie-glace au moyen duquel le pare-brise (9) peut être au moins en partie balayé, de préférence en effectuant un mouvement circulaire et ou un mouvement linéaire.

3. Machine de récolte (1) selon la revendication 1 ou 2, **caractérisée en ce que** la zone de palpage (12) qui est palpable optiquement au moyen de la caméra (9) contient au moins une partie du tablier de coupe (3) et/ou du convoyeur incliné (4).

4. Machine de récolte (1) selon une des revendications 1 à 3, **caractérisée en ce que** la zone de palpage (12) qui est palpable optiquement au moyen de la caméra (3) contient, outre une zone de tablier de coupe (29) qui contient au moins une partie du tablier de coupe (3), une zone antérieure (13) située à l'opposé de la machines de récolte (1), devant le tablier de coupe (3) dans le sens de marche de la machine de récolte (1), et/ou une zone postérieure (14) située derrière le tablier de coupe (3) dans le sens de marche de la machine de récolte (1).

5. Machine de récolte (1) selon une des revendications 1 à 4, **caractérisée en ce qu'**au moins une caméra (8) est conçue sous la forme d'une caméra RGB ou d'une caméra stéréo.

6. Machine de récolte (1) selon une des revendications 1 à 5, **caractérisée par** une pluralité de caméras (8) qui sont de préférence orientées vers diverses zones de palpage (12), plus préférentiellement toutes les zones de palpage (12) contenant respectivement au moins une partie du tablier de coupe (3) et/ou du convoyeur incliné (4).

7. Machine de récolte (1) selon une des revendications 1 à 6, **caractérisée en ce que** la caméra (8) est disposée dans une zone supérieure, de préférence contre un plafond (15) de la cabine de conduite (5).

8. Machine de récolte (1) selon une des revendications 1 à 7, **caractérisée par** un boîtier à caméra (16) au moyen duquel la caméra (8) peut être entourée spatialement, de préférence le boîtier à caméra (16) étant relié, de préférence vissé, à un plafond (15) de la cabine de conduite (5) de manière à transmettre une force.

9. Machine de récolte (1) selon une des revendications 1 à 8, **caractérisée en ce que** la caméra (8) est montée rotative par rapport à la cabine de conduite (5), de sorte que la caméra (8) comporte au moins un degré de liberté en rotation, de préférence une pluralité de degrés de liberté en rotation.

10. Machine de récolte (1) selon une des revendications 1 à 9, **caractérisée par** au moins une unité d'analyse (22) qui est reliée à la caméra (8) au moyen d'une liaison de données (23), de sorte que des images enregistrées au moyen de la caméra (8) peuvent être transférées à l'unité d'analyse (22) et traitées au moyen de l'unité d'analyse (22).
